(19) Europäisches Patentamt
European Patent Office
Office européen des brevets

(11) EP 4 659 928 A1

(12) **EUROPEAN PATENT APPLICATION**

(43) Date of publication:
**10.12.2025 Bulletin 2025/50**

(21) Application number: **24315279.0**

(22) Date of filing: **07.06.2024**

(51) International Patent Classification (IPC):
***B29C 41/00*** *(2006.01)* ***B29B 17/00*** *(2006.01)*
***B29C 41/04*** *(2006.01)* ***C08L 23/06*** *(2006.01)*

(52) Cooperative Patent Classification (CPC):
(C-Sets available)
**B29C 41/04; B29C 41/003; C08L 23/04;**
B29B 17/0042; B29B 2009/125; B29C 41/22;
B29K 2023/06; B29K 2105/26; C08L 2207/20
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **TotalEnergies OneTech**
**92400 Courbevoie (FR)**

(72) Inventors:
- **Lhost, Olivier**
  **7181 Seneffe (BE)**
- **Maziers, Eric**
  **7000 Mons (BE)**
- **Navez, Pascal**
  **7181 Seneffe (BE)**

(74) Representative: **Mellet, Valérie Martine**
**Patent 42**
**5, rue Dicks**
**4081 Esch-sur-Alzette (LU)**

(54) **ROTOMOULDED ARTICLES, RESINS, AND PROCESSES TO PROCUCE SUCH ARTICLES**

(57) The disclosure is about rotomoulded article and a process to produce said article. The article is a mono-layered article or a multi-layered article wherein the mono-layer or at least one of the layers comprises a polyethylene resin having a density of at least 0.930 g/cm$^3$ as determined according to ISO 1183-1:2012 at 23°C; a melt index $MI_2$ ranging from 3.0 to 30.0 g/10 min as determined according to ISO 1133-2011 at 190 °C under a load of 2.16 kg; and a flow activation energy fulfilling the following relationship: Eact (kJ/mole) > 70 - 12 ln ($MI_2$).

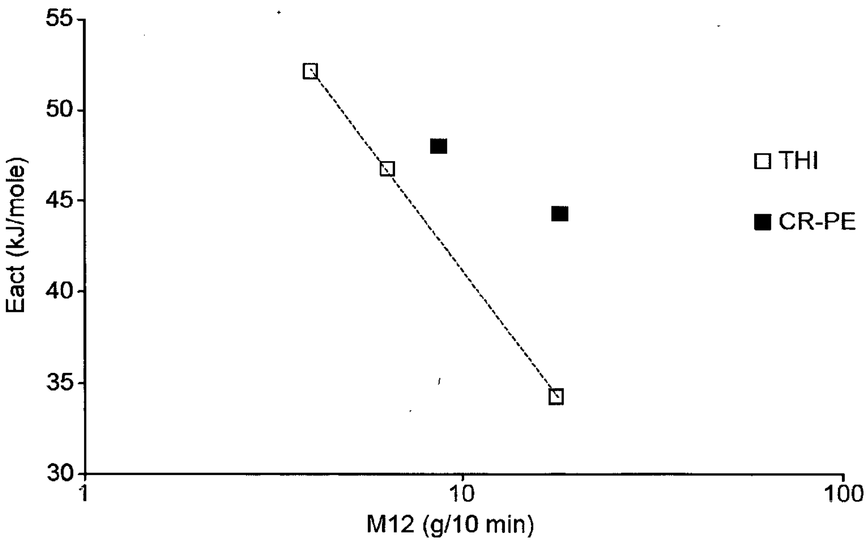


Figure 7



Processed by Luminess, 75001 PARIS (FR)

(Cont. next page)

(52) Cooperative Patent Classification (CPC): (Cont.)

C-Sets
**C08L 23/04, C08L 23/10**

## Description

### TECHNICAL FIELD

The present disclosure relates to rotomoulded articles as well as resins and processes to produce such rotomoulded articles.

### TECHNICAL BACKGROUND

Rotomoulding is used for the manufacture of simple to complex, hollow plastic products. It can be used to mould a variety of materials such as polyethylene, polypropylene, polycarbonate, or PVC.

Polyethylene represents more than 80 % of the polymers used in the rotomoulding market. This is due to the outstanding resistance of polyethylene to thermal degradation during processing, its easy grinding, good flowability, and low-temperature impact properties.

Polyethylenes prepared with a Ziegler-Natta catalyst are generally used in rotomoulding, but metallocene-produced polyethylenes are desirable because their narrow molecular distribution allows better impact properties and shorter cycle time in processing.

Recycled polyethylene materials such as post-consumer resins (PCR) available from bottles may contain a high content of chromium-catalyzed polyethylene with a low melt index and high density that cannot allow them to be used in rotomoulding applications. Recycled polyethylene materials such as post-consumer resins (PCR) are also available from films. However, they often contain LDPE and show a shear modulus (G') too low to be used in rotomoulding applications. Post-industrial resins (PIR) may be useful but are not often available. There is nevertheless a need for rotomoulded articles made from recycled polyethylene material.

There is a continuous need for improvement of polyethylene resin properties and improvement of the rotomoulded articles made from these resins.

In particular, polyethylene resins with a high flow activation energy are desirable in rotomoulding applications.

Rotomoulding involves heating a powdered resin inside a mold, where it melts and coats the interior surface of the mold cavity. Without being sure of the mechanism, it is observed that when, in the next step of the thermoforming process, cooling is considered, resins containing long chain branches (so resins with a high flow activation energy) crystallize better and more uniformly. Whatever the precise mechanism could be, resins containing a few long chain branches allow for obtaining a more uniform and consistent final product.

High flow activation energy resins are mainly linked to the presence of long-chain branching. High flow activation energy resins, due to the consequences in terms of nucleation and thickness repartition in the rotomoulding process, often have a better balance of mechanical properties including tensile strength and impact resistance. This is beneficial for rotomoulded products that require durability and strength, such as storage tanks, containers, playground equipment, and automotive parts.

While it may seem counterintuitive, a resin with higher flow activation energy can sometimes lead to shorter molding cycle times in rotomoulding. This is because it can solidify more rapidly due to its higher viscosity. Faster solidification means shorter overall processing times, which can increase productivity and reduce manufacturing costs.

There is a need for a polyethylene resin with high flow activation energy for rotomoulding applications because it offers improved flow properties and enhanced balance of mechanical properties. There is a continuous need for higher-quality products and increased efficiency in the manufacturing process.

There is a need for rotomoulded articles, resins, and processes to produce rotomoulded articles that show good processability as well as a good balance of properties that are produced at low cost and in an effective way.

### SUMMARY

Surprisingly, it has been found that the above objectives can be attained either individually or in any combination, by the use of a specific resin with high flow activation energy in rotomoulded articles.

According to a first aspect, the disclosure provides for a rotomoulded article being a mono-layered article or a multi-layered article and is remarkable in that the mono-layer or at least one of the layers comprises a polyethylene resin having

- a density of at least 0.930 $g/cm^3$ as determined according to ISO 1183-1:2012 at 23°C;
- a melt index $MI_2$ ranging from 3.0 to 30.0 g/10 min as determined according to ISO 1133-2011 at 190 °C under a load of 2.16 kg; and
- a flow activation energy fulfilling the following relationship:

$$Eact (kJ/mole) > 70 - 12 \ln (MI_2).$$

In an embodiment, the polyethylene resin is metallocene-catalyzed; with preference, polyethylene resin is metallocene-catalyzed with a catalyst system based on a bis-indenyl or a bis-cyclopentadienyl metallocene component.

For example, the polyethylene resin has a Mw/Mn ranging of at most 4.5.

In another embodiment, the polyethylene resin is or comprises one or more recycled polyethylene resins (rPE), and/or the polyethylene resin comprises from 0.1 to 8.0 wt.% of a polymer different from polyethylene based on the total weight of the polyethylene resin and as determined by $^{13}C$ NMR, wherein the polymer different from polyethylene is selected from polypropylene (PP), polyacrylate (PA), polyethylene terephthalate (PET), polystyrene (PS), polylactic acid (PLA), and any mixture thereof.

For example, the polyethylene resin has an Mw/Mn ranging of at most 15.0; preferably of at most 12.0, more preferably of at most 10.0; and even more preferably at most 8.0.

For example, the polyethylene resin is or comprises recycled chromium-catalyzed polyethylene resins and/or recycled Ziegler Natta-catalyzed polyethylene resins.

Whatever the embodiment selected, the polyethylene resin is preferably selected to have an unsaturation index higher than 2,000 wherein the unsaturation index is the product of the Mn in Dalton and the vinyl unsaturation units per 1,000 carbon atoms as determined by ASTM D6248-98:2004.

For example, the polyethylene resin has a density from 0.930 to 0.980 g/cm$^3$ as determined according to ISO 1183-1:2012 at 23°C; preferably, from 0.931 to 0.970 g/cm$^3$.

For example, the polyethylene resin has a density of at least 0.931 g/cm$^3$; preferably, at least 0.932 g/cm$^3$; and more preferably, at least 0.933 g/cm$^3$.

For example, the polyethylene resin has a density of at most 0.980 g/cm$^3$; preferably, at most 0.975 g/cm$^3$; more preferably, at most 0.970 g/cm$^3$; most preferably, at most 0.965 g/cm$^3$; and even most preferably, at most 0.960 g/cm$^3$.

For example, the polyethylene resin has a melt index $MI_2$ ranging from 4.0 to 28.0 g/10 min as determined according to ISO 1133-2011 at 190 °C under a load of 2.16 kg; preferably from 5.0 to 25.0 g/10 min; more preferably from 6.0 to 20.0 g/10 min.

For example, the polyethylene resin has a ratio of complex viscosity at a frequency of 1 rad/sec to the complex viscosity at a frequency of 100 rad/sec of at most 3.5, wherein the complex viscosities are measured at 190°C.

For example, the polyethylene resin has a z-average molecular weight (Mz) of at least 50,000 Da as determined by gel permeation chromatography.

For example, the polyethylene resin has a z-average molecular weight (Mz) of at most 120,000 Da as determined by gel permeation chromatography.

For example, the polyethylene resin has a number average molecular weight (Mn) of at least 3,000 Da as determined by gel permeation chromatography.

For example, the polyethylene resin has a number average molecular weight (Mn) of at most 45,000 Da as determined by gel permeation chromatography.

For example, the article has an Impact peak energy greater than 40 J at -40°C as determined according to ISO 6603, and/or the article has a tensile modulus of at least 500 MPa as determined according to ISO 527-1 standard (Measurements performed with an ISO 727 type 1A sample, at a temperature of 23 C, at a traction speed of 50 mm/min. for measuring strength and elongation and 1mm/min for measuring modulus).

According to a second aspect, the disclosure provides for a process to produce a rotomoulded article according to the first aspect, wherein the process is remarkable in that it comprises a step (a) of providing a polyethylene resin and a step (b) of rotomoulding the polyethylene resin into a rotomoulded article, wherein polyethylene resin has:

- a density of at least 0.930 g/cm$^3$ as determined according to ISO 1183-1:2012 at 23°C;
- a melt index $MI_2$ ranging from 3.0 to 30.0 g/10 min as determined according to ISO 1133-2011 at 190°C under a load of 2.16 kg; and
- a flow activation energy fulfilling the following relationship:

$$Eact (kJ/mole) > 70 - 12 \ln (MI_2).$$

in a preferred embodiment, step (a) comprises a step of preparing the polyethylene resin by performing a thermal treatment on a raw polyethylene material wherein the thermal treatment is performed in an extruder at a temperature of at least 300°C with a residence time of at most 10.0 min.

With preference, the temperature is at least 315°C and/or at most 450°C.

With preference, the residence time is at most 5.0 min; preferably at most 2.0 min.

With preference, the screw profile comprises two or more hot zones wherein a first hot zone comprises

successive kneading blocks elements over a length of at least 4 D followed by a left-handed element with D being the screw diameter, and one or more additional hot zones placed downstream of the first hot zone are filled mixing zones, each comprising kneading blocks elements over a length of at least 4 D followed by a kneading left-handed element or by a left-handed element with D being the screw diameter.

With preference, the successive kneading blocks elements of at least one hot zone of the extruder comprise disks with disks offset by 90 degrees and a disk width of at least 0.3 D wherein D being the screw diameter and/or in that one hot zone of the extruder is or comprises the melting zone of the extruder.

With preference, the raw polyethylene material is selected to have a melt index ($MI_2$) ranging from 0.2 to less than 3.0 g/10 min as determined according to ISO 1133-2011 at 190°C under a load of 2.16 kg and/or a density of at least 0.928 g/cm$^3$ as determined according to ISO 1183-1:2012 at 23 °C.

In an embodiment, the raw polyethylene material is or comprises a virgin polyethylene material. With preference, the virgin polyethylene material is metallocene-catalyzed; preferably with a catalyst system based on a bis-indenyl or a bis-cyclopentadienyl metallocene component. With preference, the virgin polyethylene material is metallocene-catalyzed and has a Mw/Mn ranging of at most 4.5.

In an embodiment, the raw polyethylene material is or comprises one or more recycled-polyethylene resins (rPE) and/or the raw polyethylene material comprises from 0.3 to 8.0 wt.% based on the total weight of the polyethylene resin, as determined by $^{13}C$ NMR, of a polymer different from polyethylene selected from polypropylene (PP), polyacrylate (PA), polyethylene terephthalate (PET), polystyrene (PS), polylactic acid (PLA), and any mixture thereof. With preference, the one or more recycled-polyethylene resins (rPE) have an Mw/Mn ranging of at most 30.0.

With preference the raw polyethylene material is or comprises recycled chromium-catalyzed polyethylene resins and/or recycled Ziegler Natta-catalyzed polyethylene resins.

According to a third aspect, the disclosure provides for the use of a raw polyethylene material to manufacture a rotomoulding article wherein the raw polyethylene material has a density of at least 0.928 g/cm$^3$ as determined according to ISO 1183-1:2012 at 23°C and a melt index $MI_2$ ranging from 0.2 to less than 3.0 g/10 min, and the use includes thermal treatment of the raw polyethylene material to raise its melt index to range from 3.0 to 30.0 g/10 min as determined according to ISO 1133-2011 at 190 °C under a load of 2.16 kg.

With preference, the raw polyethylene material is or comprises one or more recycled-polyethylene resins (rPE). More preferably, the raw polyethylene material is or comprises recycled chromium-catalyzed polyethylene resins and/or recycled Ziegler Natta-catalyzed polyethylene resins.

From the above definition of the process and the use, a clear benefit of the invention can be easily understood. Indeed, surprisingly, it was discovered that it is possible to produce rotomoulded articles from resins that are initially not suitable for rotomoulded applications, wherein a thermal treatment of the resins allows these resins to be upgraded. In addition, it was discovered that such treatment allows for improvement in the properties of the resins such as their flow activation energy to a range that was not attainable for straight reactor grade resins produced by the same catalyst and with a similar melt index.

In the polymer industry, it is known to produce grades adapted to each application. This results in an extended catalog wherein some grades are produced in such small quantities that the grade is delisted after a while. It is still possible to produce the grade upon a specific request, but this takes time and is expensive. The invention provides a solution to offer polymer grades upon request, in a fast and cost-effective way.

Also, recycled materials are provided as commercial flux having an average melt index. Some abundant recycled polymer fluxes have low melt index values, typically close to $MI_2$ of 0.2 g/10 min when originating from small containers (shampoo bottles, ...) and close to $MI_2$ of 1.0 g/10 min when originating from films. These recycled polymers have therefore melt indexes which makes them rather unsuitable for rotomoulding applications and hence, limits the applications of recycled polyethylene-containing materials. The invention allows for treating these recycled polyethylene-containing materials to transform them into polyethylene resins that are suitable for rotomoulding applications.

Thermal treatment of polyethylene resins is known from WO2023/151995 and WO2023/151996. These documents disclose a polyethylene composition for injection molding and a process to produce such a polyethylene composition comprising providing a twin-screw extruder with thermal regulation devices; providing an initial polyethylene-containing material comprising at least 50 wt.% of polyethylene based on the total weight of the initial polyethylene-containing material; extruding the initial polyethylene-containing material to obtain a polyethylene composition; wherein extrusion is performed with a residence time of less than 20 min; and recovering a polyethylene composition; wherein extruding comprises a thermal treatment of the initial polyethylene-containing material at a temperature of at least 300°C in one or more hot zones of the extruder by self-heating to have a maximum barrel temperature ranging from 300 to 460°C in at least one hot zone of the extruder.

According to a fourth aspect, the disclosure provides for a polyethylene resin for use in rotomoulding applications remarkable in that it shows:

- a density of at least 0.930 g/cm$^3$ as determined according to ISO 1183-1:2012 at 23°C;

- a melt index $MI_2$ ranging from 3.0 to 30.0 g/10 min as determined according to ISO 1133-2011 at 190 °C under a load of 2.16 kg; and
- a flow activation energy fulfilling the following relationship:

$$Eact (kJ/mole) > 70 - 12 \ln (MI_2).$$

With preference, the polyethylene resin has:

- a ratio of complex viscosity at a frequency of 1 rad/sec to the complex viscosity at a frequency of 100 rad/sec of at most 3.5 wherein the complex viscosities are measured at 190°C; and/or
- a number average molecular weight (Mn) of at least 3,000 Da as determined by gel permeation chromatography.

According to a fifth aspect, the disclosure provides for the use of a polyethylene resin according to the fourth on grinding machines to prepare micropellets or powder.
According to a sixth aspect, the disclosure provides for micropellets or powder prepared from a polyethylene resin according to the fourth aspect.

## DESCRIPTION OF THE FIGURES

- Figure 1: screw profile introduced in the Leistritz ZSE 18 HPe extruder (LID = 40 - MPO laboratory) and used to produce the CR-PE
- Figure 2: SEC curves for CR-PE 8 and references
- Figure 3: SEC curves for CR PE 17 and references
- Figure 4: Linear viscoelastic curves for CR-PE 8, CR-PE 17, and references
- Figure 5: Van Gurp-Palmen curves
- Figure 6: Flow activation energy as a function of the phase angle
- Figure 7: Flow activation energy as a function of the melt index

## DETAILED DESCRIPTION

It is to be understood that this disclosure is not limited to particular processes or compositions described, as such processes or compositions may, of course, vary. It is also to be understood that the terminology used herein is not intended to be limiting since the scope of the present disclosure will be limited only by the appended claims.
When describing the polymers, uses, and processes of the disclosure, the terms employed are to be construed by the following definitions, unless a context dictates otherwise. For the disclosure, the following definitions are given:
As used herein, the singular forms "a", "an", and "the" include both singular and plural referents unless the context dictates otherwise. By way of example, "a composition" means one composition or more than one composition.
The terms "comprising", "comprises" and "comprised of as used herein are synonymous with "including", "includes" or "containing", "contains", and are inclusive or open-ended and do not exclude additional, non-recited members, elements or method steps. The terms "comprising", "comprises" and "comprised of' also include the term "consisting of".
The recitation of numerical ranges by endpoints includes all integer numbers and, where appropriate, fractions subsumed within that range (e.g., 1 to 5 can include 1, 2, 3, 4, 5 when referring to, for example, a number of elements, and can also include 1.5, 2, 2.75 and 3.80, when referring to, for example, measurements). The recitation of endpoints also includes the endpoint values themselves (e.g., from 1.0 to 5.0 includes both 1.0 and 5.0). Any numerical range recited herein is intended to include all sub-ranges subsumed therein.
All references cited in the present specification are hereby incorporated by reference in their entirety. In particular, the teachings of all references herein specifically referred to are incorporated by reference. Indication of a standard method to determine a parameter implies referring to the standard in force at the priority date of the application, in case the year of the standard is not indicated.
Reference throughout this specification to "one embodiment" or "an embodiment" means that a particular feature, structure, or characteristic described in connection with the embodiment is included in at least one embodiment of the present disclosure. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in

the art from this disclosure, in one or more embodiments. Furthermore, while some embodiments described herein include some but not other features included in other embodiments, combinations of features of different embodiments are meant to be within the scope of the disclosure and form different embodiments, as would be understood by those in the art. For example, in the following claims and statements, any of the embodiments can be used in any combination.

Unless otherwise defined, all terms used in disclosing the disclosure, including technical and scientific terms, have the meaning as commonly understood by one of ordinary skill in the art to which this disclosure belongs. By means of further guidance, definitions for the terms used in the description are included to better appreciate the teaching of the present disclosure.

The terms "polyethylene" (PE) and "ethylene polymer" may be used synonymously. The term "polyethylene" encompasses ethylene homopolymer as well as ethylene copolymer resin which can be derived from ethylene and one or more comonomers selected from the group consisting of $C_3$-$C_{20}$ alpha-olefins, such as propylene, 1-butene, 1-pentene, 4-methyl-1-pentene, 1-hexene, 1-octene, 1-decene, 1-dodecene, 1-tetradecene, 1-hexadecene, 1-octadecene and 1-eicosene.

The terms "polyethylene resin" or "ethylene homopolymer resin" or "ethylene copolymer resin" refer to polyethylene fluff or powder that is extruded, and/or melted and/or pelletized and can be produced through compounding and homogenizing of the polyethylene resin as taught herein, for instance, with mixing and/or extruder equipment. Unless otherwise stated, all parameters used to define the polyethylene resin are as measured on pellets, i.e., after extrusion.

As used herein, the term "polyethylene" may be used as a shorthand for "polyethylene resin". The terms "fluff" or "powder" refer to polyethylene material with the hard catalyst particle at the core of each grain and is defined as the polymer material after it exits the polymerization reactor (or the final polymerization reactor in the case of multiple reactors connected in series).

The terms "Post-Consumer Resin", which may be abbreviated as "PCR", is used to denote the components of domestic waste, household waste or end-of-life vehicle waste. In other words, the PCRs are made of recycled products from waste created by consumers. The terms "Post-Industrial Resin", which may be abbreviated as "PIR", is used to denote the waste components from pre-consumer resins during packaging processes. In other words, the PIRs are made of recycled products created from scrap by manufacturers.

The term "recycled polyethylene resin" or "recycled polyethylene-containing material" contrasts with the term "virgin polyethylene resin" "virgin polyethylene-containing material", the term "virgin" is used to denote a polyethylene resin or material directly obtained from a polyethylene polymerization plant. The terms "directly obtained" is meant to include that the polyethylene resin may optionally be passed through a pelletization step or an additivation step or both.

Under normal production conditions in a production plant, it is expected that the melt index (MI2, HLMI, MI5) will be different for the fluff than for the polyethylene resin. Under normal production conditions in a production plant, it is expected that the density will be slightly different for the fluff than for the polyethylene resin (if PCR resins are considered, it is not a question of fluff (powder) or pellets but it is a question of flakes or pellets). Unless otherwise indicated, density and melt index for the polyethylene resin refer to the density and melt index as measured on the polyethylene resin as defined above.

The present disclosure provides a polyethylene resin suitable for rotomoulding application, a rotomoulded article comprising such a resin, and a process to produce the resin and the rotomoulded article. The present disclosure also encompasses the use of a thermally treated polyethylene resin in a rotomoulded article or in a process to manufacture such a rotomoulded article. The resin, the article, the process, and the use will be described jointly.

According to the disclosure, the rotomoulded article being a mono-layered article or a multi-layered article is characterized in that the mono-layer or at least one of the layers comprises a polyethylene resin having

- a density of at least 0.930 g/cm$^3$ as determined according to ISO 1183-1:2012 at 23°C;
- a melt index $MI_2$ ranging from 3.0 to 30.0 g/10 min as determined according to ISO 1133-2011 at 190°C under a load of 2.16 kg; and
- a flow activation energy fulfilling the following relationship:

$$E_{act}\ (\text{kJ/mole}) > 70 - 12\ \ln\ (MI_2).$$

In one or more embodiments, the polyethylene resin has a melt index ($MI_2$) ranging from 4.0 to 28.0 g/10 min from 4.5 to 27.0.0 g/10 min as determined according to ISO 1133-2011 at 190 °C under a load of 2.16 kg; preferably, ranging from 5.0 to 25.0 g/10 min; more preferably ranging from 5.5 to 22.0 g/10 min; even more preferably ranging from 6.0 to 20.0 g/10 min.

For example, the polyethylene resin has a melt index ($MI_2$) has a melt index of at least 3.2 g/10 min as determined according to ISO 1133-2011 at 190 °C under a load of 2.16 kg; preferably, at least 3.5 g/10 min or at least 3.8 g/10 min; more

preferably, at least 4.0 g/10 min or at least 4.2 g/10 min; even more preferably, at least 4.5 g/ 10 min or at least 4.8 g/10 min; most preferably, at least 5.2 g/10 min; even most preferably, at least 5.5 g/10 min; or preferably, at least 5.8 g/10 min; or preferably, at least 6.0 g/10 min; or preferably, at least 6.2 g/10 min.

in particular, the polyethylene resin has a ratio of complex viscosity at a frequency of 1 rad/sec to the complex viscosity at a frequency of 100 rad/sec of at most 3.5, said ratio being measured at 190 °C; preferably, of at most 3.2; more preferably, of at most 3.0; even more preferably, of at most 2.8; and most preferably, of at most 2.5.

In an embodiment, the polyethylene resin has a complex viscosity at 1 rad/sec at 190 °C of at most 2,000 Pa.s; preferably at most 1,800 Pa.s; more preferably at most 1,600 Pa.s; even more preferably of at most 1,500 Pa.s most preferably of at most 1,200 Pa.s.

in an embodiment, the polyethylene resin has a complex viscosity at 1 rad/sec at 190 °C ranging from 100 to 2,000 Pa·s; preferably from 150 to 1,800 Pa.s; more preferably from 200 to 1,600 Pa.s; even more preferably from 250 to 1,500 Pa.s; most preferably from 300 to 1,400 Pa.s; and even most preferably from 350 to 1,300 Pa.s; or from 400 to 1,200 Pa.s, or from 450 to 1,100 Pa.s.

With preference, the polyethylene resin has a z average molecular weight (Mz) of at most 120,000 Da as determined by gel permeation chromatography; preferably of at most 110,000 Da; more preferably of at most 100,000 Da or at most 95,000 Da.

With preference, the polyethylene resin has a z-average molecular weight (Mz) of at least 40,000 Da as determined by gel permeation chromatography; preferably of at least 50,000 Da; more preferably of at least 60,000 Da or at least 65,000 Da.

With preference, the polyethylene resin has a number average molecular weight (Mn) of at least 3,000 Da as determined by gel permeation chromatography; preferably at least 4,000 Da; more preferably, at least 6,000 Da; even more preferably at least 8,000 Da and most preferably at least 10,000 Da.

With preference, the polyethylene resin has a number average molecular weight (Mn) of at most 45,000 Da as determined by gel permeation chromatography; preferably at most 42,000 Da; more preferably at most 40,000 Da.

With preference, the polyethylene resin has an Mz/Mw of at most 7.0 as determined by size exclusion chromatography; preferably at most 6.0; more preferably at most 5.0; even more preferably at most 4.0; and most preferably at most 3.0.

For example, the polyethylene resin has an Mz/Mw of at least 1.5 as determined by size exclusion chromatography.

For example, the polyethylene resin further has an Mw/Mn ranging from 2.0 to 15.0 as determined by size exclusion chromatography; preferably from 2.0 to 12.0 or from 2.0 to 10.0; more preferably from 2.0 to 8.0 or from 2.1 to 6.0; even more preferably from 2.1 to 5.0; most preferably from 2.2 to 4.5; and even most preferably from 2.3 to 4.0; or from 2.3 to 3.5; or from 2.3 to 3.0.

In an embodiment, the polyethylene resin further has an Mw/Mn of at most 15.0 or at most 12.0 as determined by size exclusion chromatography; preferably of at most 10.0 or at most 8.0; more preferably of at most 7.0 or at most 6.0; even more preferably of at most 5.0; most preferably of at most 4.5; and even most of at most 4.0, or at most 3.5, or at most 3.0.

For example, the polyethylene resin has a density of at least 0.928 g/cm$^3$ as determined according to ISO 1183-1:2012 at 23 °C. For example, the polyethylene resin has a density of at least 0.930 g/cm$^3$ as determined according to ISO 1183-1:2012 at 23 °C; preferably, at least preferably, at least 0.932 g/cm$^3$; more preferably, at least 0.935 g/cm$^3$; even more preferably of at least 0.936 g/cm$^3$; and most preferably, of at least 0.938 g/cm$^3$.

in an embodiment, the polyethylene resin has a density of at most 0.980 g/cm$^3$ as determined according to ISO 1183-1:2012 at 23 °C; preferably, of at most 0.975 g/cm$^3$ or at most 0.970 g/cm$^3$; and more preferably, of at most 0.965 g/cm$^3$; and even more preferably, of at most 0.960 g/cm$^{3;}$ or at most 0.958 g/cm$^3$.

For example, the polyethylene resin has a density ranging from 0.930 g/cm$^3$ to 0.980 g/cm$^3$ as determined according to ISO 1183-1:2012 at 23 °C; preferably, ranging from 0.932 g/cm$^3$ to 0.975 g/cm$^{3;}$ more preferably, ranging from 0.935 g/cm$^3$ to 0.970 g/cm$^3$.

For example, the polyethylene resin has an unsaturation index higher than 2,000 or higher than 3,500 wherein the unsaturation index is the product of the Mn in Dalton and the vinyl unsaturation units per 1,000 carbon atoms as determined by ASTM D6248-98:2004; preferably higher than 5000, even preferably higher than 7000; wherein the unsaturation index is the product of the Mn, in Dalton, and the vinyl unsaturation units per 1,000 carbon atoms.

The polyethylene resin comprises at least 50 wt.% of polyethylene based on the total weight of the polyethylene resin. With preference, the polyethylene resin comprises at least 55 wt.% of polyethylene based on the total weight of the polyethylene resin; preferably, at least 60 wt.%; preferably, at least 70 wt.%; preferably, at least 80 wt.%; preferably, at least 90 wt.%; preferably, at least 95 wt.%.

In an embodiment, the polyethylene resin is a virgin material and consists of polyethylene (i.e. comprises 100 wt.% of polyethylene).

In an embodiment, the polyethylene resin is or comprises one or more recycled polyethylene resins (rPE).

Recycled-polyethylene resins may contain one or more polymers different from polyethylene.

In an embodiment, and in particular wherein the polyethylene resin is or comprises one or more recycled polyethylene resins (rPE). the polyethylene resin comprises at least one polymer different from polyethylene in a content ranging from 0 to 50 wt.% based on the total weight of the polyethylene resin wherein at least one polymer different from polyethylene is selected from polypropylene (PP), polyacrylate (PA), polyethylene terephthalate (PET), polystyrene (PS), polylactic acid (PLA), and any mixture thereof.

With preference, the polyethylene resin comprises at least one polymer different from polyethylene in a content ranging from 0 to 40.0 wt.% based on the total weight of the polyethylene resin as determined by $^{13}C$ NMR; preferably from 0.1 to 20.0 wt.%; more preferably from 0.2 to 10.0 wt.%; even more from 0.3 to 8.0 wt.%; and most preferably from 0.5 to 5.0 wt.% or from 0.5 to 4.5 wt.%.

For example, PCR polyethylene classically contains a small part of polypropylene (such as less than 5 wt.%).

<u>Producing the polyethylene resin</u>

In a preferred embodiment, the polyethylene resin is obtained by thermal treatment of raw polyethylene material to increase its melt index. However, surprisingly, the treatment performed also provides other features to the polyethylene resin that make it particularly suitable for rotomoulding.

Thus, the disclosure also provides the above-defined polyethylene resin being produced by a process comprising the following steps:

a) providing a twin-screw extruder with thermal regulation devices;
b) providing a raw polyethylene material comprising at least 50 wt.% of polyethylene based on the total weight of the raw polyethylene material;
c) extruding the raw polyethylene material to obtain a polyethylene resin; wherein extrusion is performed with a residence time of at most 10.0 minutes; and
d) recovering a polyethylene resin;

wherein step (c) of extruding comprises a thermal treatment of the raw polyethylene material at a temperature of at least 300°C in one or more hot zones of the extruder; preferably, at least 315°C.

In an embodiment, the thermal treatment is performed by self-heating of the material wherein the one or more hot zones have a total length equal to or greater than 6 D with D being the screw diameter, wherein the extrusion is performed with mechanical specific energy greater than or equal to 0.25 kWh/k or greater than or equal to 0.4 kWh/kg, wherein the screw profile comprises at least one hot zone with successive kneading blocks elements over a length of at least 4 D followed by a left-handed element with D being the screw diameter, wherein the thermal regulation devices are set to initial imposed barrel temperatures ranging between 240 and 290 °C and are switched off when the barrel temperature in the zone spontaneously exceeds the imposed barrel temperature by at least 1 °C without the need of external heat application.

In another embodiment, the thermal treatment is performed by heating the material using the thermal regulation devices of the extruder to have a maximum barrel temperature ranging from 315 to 460°C in at least one hot zone of the extruder.

The process of treating raw polyethylene material involves increasing the melt index of the said raw polyethylene material to produce a polyethylene resin with a melt index that is increased by a factor k of more than 6.0; preferably by a factor k of at least 7.0; preferably by a factor k of at least 8.0; preferably by a factor k of at least 10.0; preferably by a factor k of at least 15.0; preferably by a factor k of at least 20.0; preferably by a factor k of at least 30.0; preferably by a factor k of at least 35.0; preferably by a factor k of at least 40.0.

So that the ratio of the melt index of the polyethylene resin ($MI_2$) to the melt index of the raw polyethylene material ($MI_2$) is more than 6.0; preferably of at least 7.0, preferably by at least 8.0; preferably at least 10.0; preferably at least 15.0; preferably at least 20.0; preferably at least 30.0; preferably at least 35.0; preferably at least 40.0.

<u>The twin-screw extruder with thermal regulation devices and the step (c) of extruding the raw polyethylene material to obtain a polyethylene resin</u>

The treatment of the raw polyethylene material to obtain a polyethylene resin is performed by extrusion wherein extrusion is performed with a residence time of at most 10.0 min and wherein step (c) of extruding comprises a thermal treatment of the raw polyethylene material at a temperature of at least 300°C in one or more hot zones of the extruder.

The extruder is a twin-screw extruder. The extruder can be provided with a standard configuration for the screw profile (for example when the process comprises a thermal treatment by heating the material using the thermal regulation devices) or is provided with a screw profile that shows an aggressive design, as shown in figure 1, to impart high mechanical energy to the raw polyethylene material (for example when the process comprises a thermal treatment by self-heating or by heating the material using the thermal regulation devices)

As known to the person skilled in the art, thermal regulation devices can be used as a heating means to impart

thermal energy to the raw polyethylene material in the extruder, in addition to the thermal energy already generated by the mixing.

Extrusion mixing varies with the type of screw and screw profile and is capable of significant generation of mechanical energy, such as shear energy and/or elongation energy. Therefore, energy is introduced into the extrusion process in terms of mechanical energy and thermal energy. Heating and/or cooling of the barrels can be achieved, for example, electrically, by steam, or by the circulation of thermally controlled liquids such as oil or water.

The extruder screw comprises a screw main body, that is composed of cylindrical elements and an axis of rotation supporting the elements. The axis of rotation extends straight from its basal end to its tip. In a state in which the extruder screw is rotatably inserted in the cylinder of the barrel, the basal end of the extruder screw is positioned on one end side of the barrel, on which the supply port is provided, and the tip of the extruder screw is positioned on the other end side of the barrel, on which the discharge port is provided.

Screw extruders have a modular system that allows different screw elements to be drawn into the central shaft to build a defined screw profile. The extruder screw may comprise one or more elements selected from conveying elements, kneading elements, right-handed (normal) screw elements, left-handed (inverse) screw elements, and any combination thereof. The elements are arranged in a defined order from the basal end to the tips of the extruder screw and this order, as well as the type and number of elements involved, define the screw profile. Extruders and screw elements are commercially available for example at Leistritz.

In an embodiment of the disclosure, the treatment of the raw polyethylene material is handled by mechanical energy.

When high mechanical energy is requested, the extruder provided has a specific screw profile that is built to be "aggressive", meaning that high mechanical energy will be imparted to the raw polyethylene material. High mechanical energy will increase the temperature in the extruder as known to the person skilled in the art so that the thermal treatment is performed by self-heating of the material.

In such an embodiment, the twin-screw extruder is selected to comprise one or more hot zones, preferably being filled mixing zones, wherein the total length of the one or more hot zones is equal to or greater than 6 D with D being the screw diameter.

It is understood that in case the screw profile is selected to comprise a single hot zone, then the total length of the said hot zone is equal to or greater than 6 D with D being the screw diameter. In such a case, the hot zone is also the melting zone of the twin-screw extruder.

In case, the screw profile comprises two or more hot zones, then a first hot zone comprises successive kneading blocks elements over a length of at least 4 D followed by a left-handed element with D being the screw diameter, and one or more additional hot zones placed downstream of the first hot zone are filled mixing zones, each comprising kneading blocks elements over a length of at least 4 D followed by a kneading left-handed element or by a left-handed element with D being the screw diameter. For example, the twin-screw extruder comprises two filled mixing zones wherein each of the filled mixing zones has a length equal to or greater than 4 D with D being the screw diameter. Preferably the first hot zone is or comprises the melting zone of the extruder.

Various mixing elements could be considered in the one or more hot zones but the most preferred ones do not drive any forward conveying (dispersive kneading blocks elements with disks offset by 90 degrees). Other disk offset angles could be considered (for example, 30 degrees, 45 degrees, and/or 60 degrees) but 90 degrees is preferred. The preferred minimum width of the disk is 0.3 D.

Thus, preferably, the successive kneading blocks elements of at least one hot zone comprise disks with disks offset by 90 degrees and a disk width of at least 0.3 D wherein D is the screw diameter.

For example, the twin-screw extruder comprises more than two filled mixing zones wherein the total length of filled mixing zones is equal to or greater than 8 D with D being the screw diameter.

For example, the strong melting zone of the twin-screw extruder is made of successive mixing elements over a length of 4 D, with D being the screw diameter, followed by a left-handed element; preferably a full-flight left-handed element.

In a preferred embodiment, the thermal regulation devices of the twin-screw extruder allow cooling the barrels and the process comprises switching off the thermal regulation devices when the barrel temperature in the zone spontaneously exceeds the imposed barrel temperature by at least 1 °C without the need of external heat application; preferably, by at least 2 °C, preferably, by at least 3 °C; more preferably by at least 5 °C; even more preferably, by at least 8 °C; and most preferably, by at least 10 °C.

Indeed, when starting extrusion, thermal regulation devices will be switched on, in particular in the melting zone to allow the material to melt. Then, when the polymer is self-heating, the thermal regulation devices are switched off to allow an increase in the temperature inside the extruder.

In a preferred embodiment, step (c) of extruding the raw polyethylene material comprises performing the extrusion with mechanical specific energy greater than or equal to 0.25 kWh/kg, preferably greater than or equal to 0.28 kWh/kg; more preferably greater than or equal to 0.30 kWh/kg; even more preferably greater than or equal to 0.35

kWh/kg; most preferably greater than or equal to 0.40 kWh/kg. In an embodiment, step (c) of extruding the raw polyethylene material comprises performing the extrusion with mechanical specific energy greater than or equal to 0.45 kWh/kg, preferably greater than or equal to 0.5 kWh/kg; more preferably greater than or equal to 0.6 kWh/kg.

High rotation screw speeds are preferred, but the precise value of a high rotation screw speed is "extruder diameter" dependent. For example, when considering a diameter D of 18 mm twin-screw extruder, high rotational screw speed is considered to be higher than 500 rpm, preferably higher than 800 rpm. For example, when considering a diameter D = 58 mm twin-screw extruder, high rotational screw speed is considered to be higher than 250 rpm, preferably higher than 350 rpm.

Non-limiting examples of suitable extruder screws with specific screw profiles are illustrated in Figure 1

When the thermal treatment is performed by heating the material, the extruder provided can show either an extruder screw with a standard screw profile or with a specific screw profile (i.e., aggressive configuration).

In such an embodiment, step c) is performed at a maximum barrel temperature of at least 300 °C; preferably at least 310 °C; more preferably at least 315 °C; even more preferably at least 320 °C.

When the thermal treatment is performed by self-heating of the material, the thermal treatment of material in step c) is preferably performed at a maximum barrel temperature ranging from 300 to 400 °C; preferably, ranging from 305 °C to 390 °C; more preferably ranging from 310 °C to 380 °C; even more preferably, ranging from 315 °C to 370 °C and most preferably, ranging from 320 °C to 360 °C. The maximum barrel temperature is the highest temperature amongst the imposed or measured temperatures along the extruder.

When the thermal treatment is performed by heating of the material, the thermal treatment of material in step c) is preferably performed at a maximum barrel temperature ranging from 300 to 460 °C; preferably, ranging from 305 °C to 440 °C; more preferably ranging from 310 °C to 420 °C; even more preferably, ranging from 315 °C to 400 °C and most preferably, ranging from 320 °C to 390 °C. The maximum barrel temperature is the highest temperature amongst the imposed or measured temperatures along the extruder.

The temperature of the thermal treatment is the maximum barrel temperature. The extrusion conditions may be adapted by the person skilled in the art to impart sufficient energy to obtain a polyethylene resin with a melt index ($MI_2$) in the targeted range.

Screw speed can be adapted in function of the targeted maximum barrel temperature and of the capacity of the extruder. Higher screw speed allows a higher increase in the polymer temperature. For example, the screw speed ranges from 100 to 1200 rpm; preferably from 110 rpm to 1200 rpm; more preferably from 150 rpm to 1100 rpm; even more preferably from 200 rpm to 1000 rpm; most preferably from 300 rpm to 900 rpm; and even most preferably from 320 to 800 rpm or from 350 to 800 rpm.

In an 18 mm screw diameter twin-screw extruder, the preferred screw speed is higher than 500 rpm; in a 58 mm screw diameter twin-screw extruder, the preferred screw speed is higher than 250 rpm.

Whatever the thermal treatment is performed by heating or by self-heating, the thermal treatment of material in step (c) is performed with a residence time of at most 10.0 min; preferably of at most 8.0 min; more preferably at most 5.0 min, even more preferably at most 4.0 min; most preferably at most 3.0 min, even most preferably at most 2.0 min or at most 100 seconds.

For example, step (c) of extruding the raw polyethylene material comprises performing the extrusion with a residence time ranging from 10 seconds to at most 10.0 minutes or to less than 10.0 minutes; preferably with a residence time ranging from 10 seconds to 8.0 minutes; or with a residence time ranging from 10 seconds to 5.0 minutes or from 10 to 360 seconds; more preferably with a residence time ranging from 10 to 240 seconds or from 15 to 200 seconds; even more preferably, from 20 to 180 seconds; most preferably, from 40 to 150 seconds; and even most preferably, from 50 to 120 seconds or from 60 to 100 seconds.

<u>The raw polyethylene material and step (b) of providing a raw polyethylene material</u>

The process according to the disclosure comprises a step b) of providing a raw polyethylene material comprising at least 50 wt.% of polyethylene based on the total weight of the raw polyethylene material.

The raw polyethylene material can be a virgin polyethylene-containing material, a recycled polyethylene-containing material, or a mixture of virgin and recycled polyethylene-containing materials.

In a first embodiment, the raw material is or comprises metallocene-catalyzed; for example, the raw material is or comprises virgin polyethylene metallocene-catalyzed. More preferably, the raw material is prepared with a catalyst system based on a bis-indenyl or a bis-cyclopentadienyl metallocene component. In a preferred embodiment, the virgin polyethylene material is metallocene-catalyzed and has an Mw/Mn ranging of at most 4.5.

When the raw polyethylene material is or comprises polyethylene resins, the raw polyethylene material has an Mw/Mn of at most 4.5 as determined by gel permeation chromatography; preferably at most 4.2; more preferably at most 4.0; even more preferably at most 3.8; and most preferably, at most 3.5.

The metallocene used to prepare the polyethylene can be a bis-indenyl represented by the general formula:

$$R''(Ind)_2 MQ_2 \qquad (I)$$

or a bis-cyclopentadienyl represented by the formula:

$$(Cp)_2\ MQ_2 \qquad (II)$$

wherein (Ind) is an indenyl or an hydrogenated indenyl, substituted or unsubstituted, Cp is a cyclopentadienyl ring substituted or unsubstituted, R" is a structural bridge between the two indenyls to impart stereorigidity that comprises a C1-C4 alkylene radical, a dialkyl germanium or silicon or siloxane, or a alkyl phosphine or amine radical, which bridge is substituted or unsubstituted; Q is a hydrocarbyl radical having from 1 to 20 carbon atoms or a halogen, and M is a group IVb transition metal or Vanadium.

In formula (I), each indenyl or hydrogenated indenyl compound may be substituted in the same way or differently from one another at one or more positions in the cyclopentadienyl ring, the cyclohexenyl ring, and the bridge.

In formula (I), each substituent on the indenyl may be independently chosen from those of formula $XR_v$ in which X is chosen from group IVA, oxygen, and nitrogen, and each R is the same or different and chosen from hydrogen or hydrocarbyl of from 1 to 20 carbon atoms and v+1 is the valence of X. X is preferably C. If the cyclopentadienyl ring is substituted, its substituent groups must be so bulky as to affect the coordination of the olefin monomer to the metal M. Substituents on the cyclopentadienyl ring preferably have R as hydrogen or $CH_3$. More preferably, at least one and most preferably both cyclopentadienyl rings are unsubstituted.

In a particularly preferred embodiment, both indenyls are unsubstituted.

In formula (II), each cyclopentadienyl ring may be substituted in the same way or differently from one another at one or more positions in the cyclopentadienyl ring.

In formula (II), each substituent on the cyclopentadienyl may be independently chosen from those of formula XR*v in which X is chosen from group IVA, oxygen, and nitrogen and each R* is the same or different and chosen from hydrogen or hydrocarbyl of from 1 to 20 carbon atoms and v+1 is the valence of X. X is preferably C and the most preferred substituent is n- butyl.

R" is preferably a C1-C4 alkylene radical (as used herein to describe a difunctional radical, also called alkylidene), most preferably an ethylene bridge (as used herein to describe a difunctional radical, also called ethylidene), which is substituted or unsubstituted.

The metal M is preferably zirconium, hafnium, or titanium, most preferably zirconium.

Each Q is the same or different and can be a hydrocarbyl or hydrocarboxy radical having 1 to 20 carbon atoms or a halogen. Suitable hydrocarbyls include aryl, alkyl, alkenyl, alkylaryl, or arylalkyl. Each Q is preferably halogen.

Among the preferred metallocenes used in the present invention, one can cite bis tetrahydro-indenyl compounds and bis indenyl compounds as disclosed for example in WO 96/35729 or bis (cyclopentadienyl) compounds.

The most preferred metallocene catalysts are ethylene bis (4,5,6,7-tetrahydro-1-indenyl) zirconium dichloride and bis (n-butyl-cyclopentadienyl) zirconium dichloride.

The metallocene may be supported according to any method known in the art.

In the event it is supported, the support used in the present invention can be any organic or inorganic solids, particularly porous supports such as talc, inorganic oxides, and resinous support material such as polyolefin. Preferably, the support material is an inorganic oxide in its finely divided form.

The addition, on the support, of an agent that reacts with the support and has an ionising action, creates an active site.

Preferably, alumoxane is used to ionise the catalyst during the polymerization procedure, and any alumoxane known in the art is suitable.

The preferred alumoxanes comprise oligomeric linear and/or cyclic alkyl alumoxanes represented, for oligomeric, linear alumoxanes, by the formula:

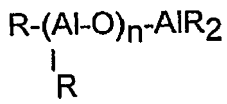

(IV)

And, for oligomeric, cyclic alumoxanes, by the formula:

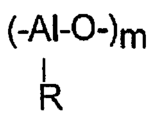

(V)

wherein n is 1-40, preferably 10-20, m is 3-40, preferably 3-20 and R is a Cl-C8 alkyl group and preferably methyl.

Methylalumoxane is preferably used.

One or more aluminiumalkyl(s) can be used as catalyst in the reactor. An aluminiumalkyl represented by the formula $AlR_3$ can be used wherein each R is the same or different and is selected from halides or alkoxy or alkyl groups having from 1 to 12 carbon atoms. Especially suitable aluminiumalkyl is trialkylaluminium, the most preferred being triisobutylaluminium (TIBAL).

Further, the catalyst may be prepolymerised before introducing it in the reaction zone and/or before the stabilization of the reaction conditions in the reactor.

The polymerisation of the metallocene-catalyzed polyethylene can be carried out in gas, solution or slurry phase. Slurry polymerisation is preferably used to prepare the polyethylene. The polymerisation temperature ranges from 20 to 125°C, preferably from 60 to 95°C and the pressure ranges from 0.1 to 5.6 MPa, preferably from 2 to 4 MPa, for a time ranging from 10 minutes to 4 hours, preferably from 1 and 2.5 hours.

A continuous single-loop reactor is preferably used for conducting the polymerisation under quasi steady state conditions. A double loop reactor can also be used to produce either monomodal or bimodal resins, such as a resin consisting of a first fraction produced in the first reactor under first polymerisation conditions and a second fraction produced in the second reactor under second polymerisation conditions, said two fractions having the same molecular weight and different densities.

The average molecular weight is controlled by adding hydrogen during polymerisation. The relative amounts of hydrogen and olefin introduced into the polymerisation reactor are from 0.001 to 15 mole percent hydrogen and from 99.999 to 85 mole percent olefin based on total hydrogen and olefin present, preferably from 0.2 to 3 mole percent hydrogen and from 99.8 to 97 mole percent olefin.

The density of the polyethylene is regulated by the amount of comonomer injected into the reactor; examples of comonomer that can be used include 1-olefins, typically C3 to C20 olefins among which propylene, butene, hexene, octene, 4-methyl-pentene are preferred, the most preferred being hexene.

An example of a polyethylene suitable to be used as raw material is Lumicene® M3410 EP, which is commercially available from TotalEnergies. Lumicene® M3410 EP is a metallocene-based Medium Density Polyethylene with hexene as comonomer. Lumicene® M3410 EP has a density of 0.934 $g/cm^3$, and a melt index of 0.9 g/10 min. In a second embodiment, which may be complementary to the first embodiment, the raw polyethylene material is a recycled polyethylene-containing material. As used herein, the terms "recycled polyethylene resin" encompasses both Post-Consumer Resins (PCR) and Post-Industrial Resins (PIR).

With preference the raw polyethylene material is or comprises recycled chromium-catalyzed polyethylene resins and/or recycled Ziegler Natta-catalyzed polyethylene resins.

When the raw polyethylene material is or comprises chromium-catalyzed polyethylene resins and/or Ziegler Natta-catalyzed polyethylene resins, the raw polyethylene material has an Mw/Mn ranging from 3.0 to 30.0 as determined by gel permeation chromatography; preferably ranging from 4.0 to 25.0; more preferably from 5.0 to 20.0; even more preferably from 6.0 to 15.0; and most preferably, from 7.0 to 12.0.

in an embodiment, the raw polyethylene material is a recycled polyethylene-containing material. Recycled polyethylene-containing material may contain one or more polymers different from polyethylene.

In an embodiment, and in particular wherein the raw polyethylene material is a recycled polyethylene-containing material; the raw polyethylene material comprises at least one polymer different from polyethylene in a content ranging from 0 to 50 wt.% based on the total weight of the raw polyethylene material as determined by $^{13}C$ NMR wherein at least one polymer different from polyethylene is selected from polypropylene (PP), polyacrylate (PA), polyethylene terephthalate (PET), polystyrene (PS), polylactic acid (PLA), and any mixture thereof.

With preference, the raw polyethylene material comprises at least one polymer different from polyethylene in a content ranging from 0 to 40.0 wt.% based on the total weight of the raw polyethylene material as determined by $^{13}C$ NMR; preferably from 0.1 to 20.0 wt.%; more preferably from 0.2 to 10.0 wt.%; even more from 0.3 to 8.0 wt.%; and most preferably from 0.5 to 5.0 wt.%.

For example, PCR polyethylene classically contains a small part of polypropylene (such as less than 5 wt.%).

In some embodiment, the raw material is a mixture of one or more resins selected from virgin metallocene-catalyzed polyethylene resins, recycled metallocene-catalyzed polyethylene resins, virgin chromium-catalyzed polyethylene resins, recycled chromium-catalyzed polyethylene resins, virgin Ziegler Natta-catalyzed polyethylene resins, and recycled Ziegler Natta-catalyzed polyethylene resins.

Whatever is the catalyst, the following may be used to further define the raw material.

Suitable polyethylene includes but is not limited to a homopolymer of ethylene, copolymer of ethylene, and a higher alpha-olefin comonomer. Thus, preferably, the raw polyethylene material comprises one or more polyethylene homopolymers, one or more polyethylene copolymers, and any mixture thereof.

The term "copolymer" refers to a polymer, which is made by linking two different types of monomers in the same polymer chain. Preferred comonomers are alpha-olefins having from 3 to 20 carbon atoms or from 3 to 10 carbon atoms.

More preferred comonomers are selected from the group comprising propylene, butene-1, pentene-1, hexene-1, heptene-1, octene-1, nonene-1, decene-1, and any mixture thereof. Even more preferred comonomers are selected from the group comprising butene-1, hexene-1, octene-1, and any mixture thereof. The most preferred comonomer is hexene-1.

The term "homopolymer" refers to a polymer that is made by linking only one monomer in the absence of comonomers. Ethylene homopolymers are therefore essentially without any comonomer. By "essentially without" is meant that no comonomer is intentionally added during the production of the polyethylene, but can nevertheless be present in up to 0.2 wt.%, preferably in up to 0.1 wt.% and most preferably in up to 0.05 wt.%, relative to the total weight of the polyethylene.

The raw polyethylene material is selected to comprise at least 50 wt.% of polyethylene based on the total weight of the raw polyethylene material. With preference, the raw polyethylene material is selected to comprise at least 55 wt.% of polyethylene based on the total weight of the raw polyethylene material; preferably, at least 60 wt.%; preferably, at least 70 wt.%; preferably, at least 80 wt.%; preferably, at least 90 wt.%; preferably, at least 95 wt.%.

In an embodiment, the raw polyethylene material is a virgin material and consists of polyethylene (i.e. comprises 100 wt.% of polyethylene).

In an embodiment, the raw polyethylene material has a high load melt index (HLMI R) of at least 1.0 g/10 min as determined according to ISO 1133-2011 at 190 °C under a load of 21.6 kg; preferably at least 1.2 g/10 min; more preferably at least 1.5 g/10 min.

In an embodiment the raw polyethylene material has a melt index ($MI_2$) of at least 0.10 g/10 min as determined according to ISO 1133-2011 at 190 °C under a load of 2.16 kg; preferably at least 0.15 g/10 min; more preferably at least 0.2 g/10 min; even more preferably at least 0.5 g/10 min; most preferably at least 0.8 g/10 min and even most preferably at least 0.9 g/10 min.

For example, the raw polyethylene material is selected to have a melt index ranging from a high load melt index (HLMI R) as determined according to ISO 1133-2011 at 190 °C under a load of 21.6 kg of at least 1.0 g/10 min to a melt index ($MI_2$) of at most 3.0 g/10 min as determined according to ISO 1133-2011 at 190 °C under a load of 2.16 kg.

In an embodiment the raw polyethylene material has a melt index ($MI_2$) of less than 4.0 g/10 min as determined according to ISO 1133-2011 at 190 °C under a load of 2.16 kg; preferably at most 3.5 g/10 min or at most 3.0 g/10 min; more preferably at most 2.8 g/10 min or at most 2.5 g/10 min; even more preferably at most 2.2 g/10 min. most preferably at most 2.0 g/10 min and even most preferably at most 1.8 g/10 min, or at most 1.6 g/10 min.

For example, the raw polyethylene material has a melt index ($MI_2$) ranging from 0.6 to 2.5 g/10 min as determined according to ISO 1133-2011 at 190 °C under a load of 2.16 kg; preferably, ranging from 0.7 to 2.2 g/10 min; more preferably ranging from 0.8 to 2.0 g/10 min; even more preferably ranging from 0.9 to 1.8 g/10 min.

For example, the raw polyethylene material has a density of at least 0.925 g/cm$^3$ as determined according to ISO 1183-1:2012 at 23 °C; preferably, at least 0.925 g/cm$^{3;}$ preferably, at least 0.928 g/cm$^{3;}$ more preferably, at least 0.930 g/cm$^{3;}$ even more preferably of at least 0.932 g/cm$^{3;}$ and most preferably, of at least 0.934 g/cm$^3$.

For example, the raw polyethylene material has a density of at most 0.980 g/cm$^3$ as determined according to ISO 1183-1:2012 at 23 °C; preferably, of at most 0.975 g/cm$^{3;}$ more preferably, of at most 0.970 g/cm$^{3;}$ even more preferably, of at most 0.962 g/cm$^3$ or of at most 0.960 g/cm$^{3;}$ most preferably, of at most 0.950 g/cm$^3$ and most preferably, of at most 0.945 g/cm$^3$.

For example, the raw polyethylene material has a density ranging from 0.925 g/cm$^3$ to 0.980 g/cm$^3$ as determined according to ISO 1183-1:2012 at 23 °C; preferably, ranging from 0.928 g/cm$^3$ to 0.970 g/cm$^3$; more preferably, ranging from 0.930 g/cm$^3$ to 0.960 g/cm$^3$; and even more preferably, ranging from 0.932 g/cm$^3$ to 0.945 g/cm$^3$.

In an embodiment, the raw polyethylene material is selected to have a melt index ($MI_2$) ranging from 0.8 to 2.0 g/10 min as determined according to ISO 1133-2011 at 190 °C • under a load of 2.16 kg and a density ranging from 0.928 g/cm$^3$ to less than 0.960 g/cm$^3$ as determined according to ISO 1183-1:2012 at 23 °C; preferably from 0.930 g/cm$^3$ to 0.950 g/cm$^3$.

In some embodiments, the raw polyethylene material has an Mz/Mw of at least 1.5 as determined by gel permeation chromatography; preferably, ranging from 1.5 to 10.0; more preferably, from 1.6 to 8.0; even more preferably, from 1.7 to 6.0; and most preferably, from 1.8 to 4.0.

In some embodiments, the raw polyethylene material has a ratio of complex viscosity at a frequency of 1 rad/sec to the complex viscosity at a frequency of 100 rad/sec of more than 3.5 wherein the complex viscosities are measured at 190°C; preferably, of at least 3.6; more preferably, of at least 3.8; and even more preferably of at least 4.0.

<u>Step (d) of recovering a polyethylene resin</u>

Step (d) comprises recovering the polyethylene resin as defined above that is the treated raw polyethylene material.

For example, the polyethylene resin has a VOC content lower than the VOC content of the raw polyethylene

material.

VOC is the amount of volatile organic compounds (VOC) in ppm wherein the volatile compounds are defined to be chains with 12 carbon atoms or a lower number. This reduction of VOC is beneficial but a very significant decrease of such content is needed to eliminate the odour.

The present disclosure encompasses articles produced from the polyethylene resin as defined above wherein the article is a rotomoulded article; preferably, the article is selected from a bottle or a container.

For example, the article is produced using from 40 wt.% to 100 wt.% of raw polyethylene material being a recycled polyethylene-containing and has a VOC content lower than the raw polyethylene material.

In a preferred embodiment, the polyethylene resin is ground using known grinding machines to prepare micropellets or powder suitable for rotomoulding application.

Test methods

The melt flow index $MI_2$ of the polyethylene is determined according to ISO 1133-2011 at 190 °C under a load of 2.16 kg.

The HLMI of the polyethylene is determined according to ISO 1133-2011 at 190 °C under a load of 21.6 kg.

The Mn, Mw, Mz, Mw/Mn and Mz/Mw: The molecular weight ($M_n$ (number average molecular weight), $M_w$ (weight average molecular weight) and molecular weight distributions D (Mw/Mn) were determined by size exclusion chromatography (SEC). Briefly, a GPC-IR5 from Polymer Char was used: 10 mg polyethylene sample was dissolved at 160 °C in 10 ml of trichlorobenzene for 1 hour. Injection volume: about 400 μl, automatic sample preparation and injection temperature: 160 °C. Column temperature: 145 °C. Detector temperature: 160 °C. Two Shodex AT-806MS (Showa Denko) and one Styragel HT6E (Waters) columns were used with a flow rate of 1 ml/min (eluent: trichlorobenzene). Detector: Infrared detector (2800-3000 $cm^{-1}$). Calibration: narrow standards of polystyrene (PS) (commercially available). Calculation of molecular weight Mi of each fraction i of eluted polyethylene is based on the Mark-Houwink relation ($\log_{10}(Mp_E) = 0.965909 \times \log_{10}(M_{PS}) - 0.28264$) (cut off on the low molecular weight end at $M_{PE}$ = 1000).

The molecular weight averages used in establishing molecular weight/property relationships are the number average ($M_n$), weight average ($M_w$) and z average ($M_z$) molecular weight. These averages are defined by the following expressions and are determined from the calculated $M_i$:

$$M_n = \frac{\sum_i N_i M_i}{\sum_i N_i} = \frac{\sum_i W_i}{\sum_i W_i/M_i} = \frac{\sum_i h_i}{\sum_i h_i/M_i}$$

$$M_w = \frac{\sum_i N_i M_i^2}{\sum_i N_i M_i} = \frac{\sum_i W_i M_i}{\sum_i W_i} = \frac{\sum_i h_i M_i}{\sum_i h_i}$$

$$M_z = \frac{\sum_i N_i M_i^3}{\sum_i N_i M_i^2} = \frac{\sum_i W_i M_i^2}{\sum_i W_i M_i} = \frac{\sum_i h_i M_i^2}{\sum_i h_i M_i}$$

Here $N_i$ and $W_i$ are the number and weight, respectively, of molecules having molecular weight Mi. The third representation in each case (farthest right) defines how one obtains these averages from SEC chromatograms. $h_i$ is the height (from baseline) of the SEC curve at the $i_{th}$ elution fraction and $M_i$ is the molecular weight of species eluting at this increment.

The molecular weight distribution (MWD) is then calculated as Mw/Mn.

The $^{13}C$-NMR analysis is performed using a 400 MHz or 500 MHz Bruker NMR spectrometer under conditions such that the signal intensity in the spectrum is directly proportional to the total number of contributing carbon atoms in the sample. Such conditions are well-known to the skilled person and include, for example, sufficient relaxation time, etc. In practice, the intensity of a signal is obtained from its integral, i.e., the corresponding area. The data are acquired using proton decoupling, 2000 to 4000 scans per spectrum with 10 mm room temperature through or 240 scans per spectrum with a 10 mm cryoprobe, a pulse repetition delay of 11 seconds and a spectral width of 25000 Hz (+/- 3000 Hz). The sample is prepared by dissolving a sufficient amount of polymer in 1,2,4-trichlorobenzene (TCB, 99%, spectroscopic grade) at 130 °C and occasional agitation to homogenize the sample, followed by the addition of hexadeuterobenzene (CeDe,

spectroscopic grade) and a minor amount of hexamethyldisiloxane (HMDS, 99.5+ %), with HMDS serving as an internal standard. To give an example, about 200 mg to 600 mg of polymer is dissolved in 2.0 mL of TCB, followed by the addition of 0.5 mL of $C_6D_6$ and 2 to 3 drops of HMDS.

Following data acquisition, the chemical shifts are referenced to the signal of the internal standard HMDS, which is assigned a value of 2.03 ppm.

The comonomer content in polyethylene is determined by $^{13}$C-NMR analysis of pellets according to the method described by G.J. Ray et al. (Macromolecules, 1977, 10, (4), 773-778).

Crystallization temperature (Tc) and Melting temperature (Tm) are determined according to ISO 11357-3:2018 on a DSC Q2000 instrument by TA Instruments. To erase the thermal history the samples are first heated to 220 °C and kept at 220 °C for 3 minutes. Then the polymer is cooled at -20 °C/min. up to 20 °C and kept at 20 °C for 3 minutes. The crystallization temperature is determined during this cooling step. The crystallization temperature Tc corresponds to the temperature of the extremum of the spectrogram presenting the heat flux associated with the polymer as a function of the temperature during its cooling. The polymer is then melted up to 220 °C at 20 °C/min. and the melting temperature is determined during this heating step. The melting temperature corresponds to the temperature of the extremum of the spectrogram presenting the heat flux associated with the polymer as a function of the temperature during its melting.

The density was measured according to the method of standard ISO 1183-1:2012 (immersion method) at a temperature of 23 °C.

Complex shear modulus and viscosity: The complex shear modulus G*(w)=G'(w)+jG"(w) ($J^2$=-1, G'(w): storage modulus and G"(w): loss modulus) was determined using a DHR-2, a stress-controlled rheometer from TA Instruments. Frequency sweeps have been carried out in the linear domain (1 % strain) at 190°C from 100 to 0.01 rad.s$^{-1}$ under nitrogen flow to prevent thermal oxidative degradation. The used geometry was 25 mm diameter parallel plates with a 2 mm gap. The samples (25 mm diameter, 2 mm thickness) for these experiments were obtained beforehand using an injection press (Babyplast type).

The complex viscosity $\eta^*(\omega)$ is calculated according to the following equation of the linear viscoelasticity:

$$|\eta^*(\omega)| = \left[\left(\frac{G'(\omega)}{\omega}\right)^2 + \left(\frac{G''(\omega)}{\omega}\right)^2\right]^{1/2}$$

Impact properties were determined according to ISO 6603.

Flow Activation Energy (Ea) Measurement

The bulk dynamic rheological properties (e.g., G', G" and $\eta^*$) of the polypropylene composition were measured at 170 °C, 190 °C and 210 °C. At each temperature, scans were performed as a function of angular shear frequency (from 300 to 0.1 rad/s) at a constant shears strain appropriately determined by the above procedure.

The dynamic rheological data was then analyzed using the Rheometrics Software. The following conditions were selected for the time temperature (t-T) superposition and the determination of the flow activation energies (Ea) according to Arrhenius equation:

$$a_T = \exp(Ea/kT),$$

which relates the shift factor (a-r) to Ea:

| | |
|---|---|
| Rheological Parameters: | G'(ω), G"(ω) and η*(ω) |
| Reference temperature: | 190 °C |
| Shift mode: | 2D (i.e., horizontal and vertical shifts) |
| Shift Accuracy: | High |
| Interpolation Mode: | Spline |

## EXAMPLES

### Example 1

Preparation of the CR-PE roto-grade resins

To produce "Control-Rheology polyethylene" (CR-PE) suitable for rotomoulding, SR-PE 1 (i.e. Lumicene® M3410 EP polyethylene grade) was selected. Grades were produced characterized by a melt index of 8 and 17 g/10 min, grades which could be compared to, respectively, straight reactor polyethylene (SR-PE) suitable for rotomoudling applications; namely SR-PE 8 (Lumicene® M3581 UV - lot D131222856) and SR-PE 17 (Lumicene® M35160- lot H402E00118) grades.

SR-PE1, and SR-PE 8SR-PE 17 are commercially available from TotalEnergies®.

The screw profile presented in **Figure 1** was introduced in the Leistritz ZSE 18 HPe extruder (L/D = 40 - MPO-laboratory). It contains three sequences of "mixing elements followed by a reverse element".

For the production of the two grades called CR-PE 8 and CR-PE 17, an additional content of Irganox B225 was added (1500 ppm) in the hopper of the extruder. This was imposed as these grades will be later used in the rotomoulding process and the stability of the grades during this process needs to be certain.

Extrusion was performed with an output of 2 kg/h. For CR-PE 8, the maximum barrel temperature was 320°C and the screw speed was 780 rpm. For the CR-PE 17, the maximum barrel temperature was 327°C and the screw speed was 1050 rpm.

Analysis of the CR-PE roto-grade resins obtained

The properties of the resins have been tested and compared to the straight reactor grades. Results are provided in Tables 1 to 5

Table 1: Molecular design

| | Mn | Mw | Mz | Mw/Mn | Mz/Mw | $MI_2$ | Density |
|---|---|---|---|---|---|---|---|
| SR-PE 1 | 32,900 | 84,800 | 157,000 | 2.6 | 1.9 | 0.9(*) | 0.934(*) |
| CR-PE 8 | 20,500 | 49,000 | 89,600 | 2.4 | 1.8 | 8.76 | 0.9388 |
| SR-PE 8 | 20,500 | 53,100 | 101,000 | 2.6 | 1.9 | 6.42 | 0.9347 |
| CR-PE 17 | 17,400 | 40,200 | 71,400 | 2.3 | 1.8 | 18.07 | 0.9408 |
| SR-PE 17 | 16,900 | 42,900 | 78,700 | 2.5 | 1.8 | 17.65 | 0.9337 |
| (*) value from the datasheet. | | | | | | | |

From Table 1, it can be seen that, by comparison to the starting material PE1, a decrease in the mean molecular masses was observed for CR-PE 8 and CR-PE 17. A narrowing of the molecular weight distribution was also observed. Density was increased.

Table 2: Rheological properties

| | RDA at 190°C | | | | $E_{act}$ (kJ/mole) | 70 - 12 ln ($MI_2$). |
|---|---|---|---|---|---|---|
| | η 1 rads | η 10 rads | η 100 rads | η 1 rads/ η 100 rads | | |
| SR-PE 1 | 5,040 | 2,690 | 1,250 | 4.03 | 42.2 | 71.3 |
| CR-PE 8 | 1,094 | 829 | 500 | 2.19 | 48.0 | 43.9 |
| SR-PE 8 | 1,265 | 934 | 560 | 2.26 | 46.8 | 47.6 |
| CR-PE 17 | 475 | 419 | 290 | 1.64 | 44.3 | 35.2 |
| SR-PE 17 | 489 | 437 | 321 | 1.52 | 34.3 | 35.5 |

As regards the rheological properties, the evolution of the viscosity as a function of the frequency is presented in Figure 4. A shift of the whole viscosity curves towards lower viscosity values is observed for CR-PE8 and CR-PE 17 by comparison to SR-PE1. However, at a similar melt index, the viscosity curves associated with CR-PE 8 and CR-PE 17 are close but not precisely the same as those of the metallocene straight-reactor polyethylene (SR-PE) grade with a similar melt index.

The viscoelastic properties of CR-PE grades when compared to the SR-PE grade of equivalent melt index are also observed when considering van Gurp Palmen (VGP) plots (Figure 5) and the evolution of the flow activation energy as

a function of the phase angle (Figure 6).

Considering the VGP plots, the "bump" in the δ = f(G*) dependence observed around G = 10 000 Pa and considered as clear evidence of long chain branching (LCB) 5, is more pronounced in the CR-PE 8 grade than in the SR-PE 8. The δ = f(G*) dependence of the SR-PE 17 looks very close to those of a linear polymer grade whereas the dependence of the CR-PE 17 is comparatively clearly shifted towards lower δ values, specifically around G = 10 000 Pa. in other words, a "bump" clearly exists in the CR-PE 17 VGP plot, demonstrating the LCB presence.

As regards the evolution of the flow activation energy as a function of the phase angle (Figure 6), a peak is observed in the SR-PE1 representative curve at a phase angle close to 65 degrees. Such a peak is shifted towards a higher phase angle and lower flow activation energies when decreasing the average molecular masses of the polyethylene grade.

Comparing CR-PE and SR-PE grades at equivalent melt index, a shift of the representative curves towards a lower phase angle is systematically observed for CR-PE grades. It was attributed to additional branched polymer chains with higher molecular masses.

In conclusion, the CR-PE roto grades are comparable to the targeted SR-PE grades but with differences between their molecular weight distribution and their long chain branching architecture.

Table 3:

| | $T_{melt}$ (°C) | Δ $H_{melt}$ (j/g) |
|---|---|---|
| CR-PE 8 | 122.8 | 156.8 |
| CR-PE 17 | 123.1 | 166.7 |
| SR-PE 8 | 120.1 | 147.4 |
| SR-PE 17 | 118.1 | 152.6 |

**Example 2** use of the resins in rotomoulding applications.

The four grades (CR-PE 8, CR-PE 17, SR-PE 8SR-PE 8, and SR-PE 17) were tested in rotomoulding application. The products were first ground and then rotomoulded, producing small containers. Each grade was rotomoulded at two different PIAT (Peak Internal Air Temperature - Table 4), leading to 8 containers.

During the rotomoulding process, the CR-PEs grades behave similarly to the SR-PE 8 and SR-PE 17 grades. No significant difference between the grades is observed, for example when comparing the temperature profiles recorded during the process.

Properties of the rotomoulded containers

Impact properties at various temperatures (23, -20 and -40°C) and tensile tests were performed with the rotomoulded containers (See Tables 4 and 5). Thickness was 4.5 mm.

Table 4: Tensile properties

| | Sample Ref | PIAT (°C) | Tensile test | |
|---|---|---|---|---|
| | | | Modulus (MPa) | Elongation at break (%) |
| CR-PE 8 | T9 | 199 | 666 | 112 |
| | T1 | 208 | 671 | 96 |
| CR-PE 17 | T3 | 194 | 744 | 115 |
| | T4 | 215 | 749 | 103 |
| SR-PE 8 | T7 | 205 | 560 | 247 |
| | T8 | 219 | 558 | 157 |
| SR-PE 17 | T6 | 197 | 554 | 167 |
| | T5 | 218 | 554 | 109 |

From the results, it can be seen that the CR-PE containers are all characterized by a higher modulus and a lower elongation at break than those of the containers produced with the SR-PE 8 and the SR-PE 17 grades.

Table 5: Impact properties as determined according to ISO 6603

| Sample Ref | Impact at 23°C | | Impact at -20°C | | Impact at -40°C | |
|---|---|---|---|---|---|---|
| | Peak energy (J) | Total energy (J) | Peak energy (J) | Total energy (J) | Peak energy (J) | Total energy (J) |
| T9 | 32 | 53 | 42 | 69 | 50 | 75 |
| T1 | 31 | 54 | 45 | 96 | 48 | 70 |
| T3 | 32 | 60 | 49 | 87 | 53 | 92 |
| T4 | 30 | 57 | 50 | 90 | 55 | 101 |
| T7 | 28 | 48 | 44 | 71 | 50 | 72 |
| T8 | 29 | 49 | 46 | 75 | 46 | 61 |
| T6 | 25 | 49 | 44 | 80 | 50 | 90 |
| T5 | 28 | 52 | 48 | 87 | 42 | 75 |

From the results, it can be seen that the CR-PEs containers are better than those of the containers produced with the SR-PE 8 and the SR-PE 17 grades.

Surprisingly, it can be seen that the inventive polyethylene resin shows greater flow activation energy and, at the same time good (or improved) impact properties.

## Claims

1. A rotomoulded article being a mono-layered article or a multi-layered article is **characterized in that** the mono-layer or at least one of the layers comprises a polyethylene resin having

   - a density of at least 0.930 g/$cm^3$ as determined according to ISO 1183-1:2012 at 23°C;
   - a melt index $MI_2$ ranging from 3.0 to 30.0 g/10 min as determined according to ISO 1133-2011 at 190 °C under a load of 2.16 kg; and
   - a flow activation energy fulfilling the following relationship:

   $$Eact\ (kJ/mole) > 70 - 12\ ln\ (MI_2).$$

2. The rotomoulded article according to claim 1 is **characterized in that** the polyethylene resin is metallocene-catalyzed; and/or **in that** the polyethylene resin has a Mw/Mn ranging of at most 4.5.

3. The rotomoulded article according to claim 1 is **characterized in that** the polyethylene resin is or comprises one or more recycled-polyethylene resins (rPE) and/or **in that** the polyethylene resin comprises from 0.1 to 8.0 wt.% based on the total weight of the polyethylene resin, as determined by $^{13}C$ NMR, of a polymer different from polyethylene selected from polypropylene (PP), polyacrylate (PA), polyethylene terephthalate (PET), polystyrene (PS), polylactic acid (PLA), and any mixture thereof.

4. The rotomoulded article according to any one of claims 1 to 3 is **characterized in that** the polyethylene resin has a density at least 0.932 g/$cm^3$ as determined according to ISO 1183-1:2012 at 23°C; and/or at most 0.970 g/$cm^3$.

5. The rotomoulded article according to any one of claims 1 to 4 is **characterized in that** the polyethylene resin has a melt index $MI_2$ ranging from 4.0 to 28.0 g/10 min as determined according to ISO 1133-2011 at 190 °C under a load of 2.16 kg; preferably from 6.0 to 20.0 g/10 min.

6. The rotomoulded article according to any one of claims 1 to 5 is **characterized in that** the polyethylene resin has a ratio of complex viscosity at a frequency of 1 rad/sec to the complex viscosity at a frequency of 100 rad/sec of at most 3.5, wherein the complex viscosities are measured at 190°C; and/or **in that** it has a number average molecular weight (Mn) of at least 3,000 Da as determined by gel permeation chromatography.

**7.** The rotomoulded article according to any one of claims 1 to 6 is **characterized in that** the article has an Impact peak energy greater than 40 J at -40°C as determined according to ISO 6603 and/or **in that** the article has a tensile modulus of at least 500 MPa as determined according to ISO 527-1 standard (Measurements performed with a ISO 727 type 1A sample, at a temperature of 23 C, at a traction speed of 50 mm/min. for measuring strength and elongation and 1mm/min for measuring modulus).

**8.** A process to produce a rotomoulded article according to any one of claim 1 to 7 comprising a) of providing a polyethylene resin and b) a step of rotomoulding the polyethylene resin into a rotomoulded article, wherein polyethylene resin has:

- a density of at least 0.930 g/cm$^3$ as determined according to ISO 1183-1:2012 at 23°C;
- a melt index $MI_2$ ranging from 3.0 to 30.0 g/10 min as determined according to ISO 1133-2011 at 190 °C under a load of 2.16 kg; and
- a flow activation energy fulfilling the following relationship:

$$Eact\ (kJ/mole) > 70 - 12\ ln\ (MI_2).$$

**9.** The process according to claim 8 is **characterized in that** step a) comprises a step of preparing the polyethylene resin by performing a thermal treatment on a raw polyethylene material wherein the thermal treatment is performed in an extruder at a temperature of at least 300 °C with a residence time of at most 10.0 min.

**10.** The process according to claim 9 is **characterized in that** the raw polyethylene material is selected to have a melt index ($MI_2$) ranging from 0.2 to less than 3.0 g/10 min as determined according to ISO 1133-2011 at 190 °C under a load of 2.16 kg and/or a density of at least 0.928 g/cm$^3$ as determined according to ISO 1183-1:2012 at 23 °C.

**11.** The process according to claim 7 or 10 is **characterized in that** the raw polyethylene material is or comprises one or more recycled-polyethylene resins (rPE) and/or **in that** the raw polyethylene material comprises from 0.3 to 8.0 wt.% based on the total weight of the polyethylene resin, as determined by $^{13}C$ NMR, of a polymer different from polyethylene selected from polypropylene (PP), polyacrylate (PA), polyethylene terephthalate (PET), polystyrene (PS), polylactic acid (PLA), and any mixture thereof.

**12.** Use of a raw polyethylene material to manufacture a rotomoulding article **characterized in that** the raw polyethylene material has a density of at least 0.928 g/cm$^3$ as determined according to ISO 1183-1:2012 at 23°C and a melt index $MI_2$ ranging from 0.2 to less than 3.0 g/10 min, and the use includes thermal treatment of the raw polyethylene material to raise its melt index to range from 3.0 to 30.0 g/10 min as determined according to ISO 1133-2011 at 190 °C under a load of 2.16 kg; with preference, the raw polyethylene material is or comprises one or more recycled-polyethylene resins (rPE).

**13.** Polyethylene resin for use in rotomoulding applications **characterized in that** it shows:

- a density of at least 0.930 g/cm$^3$ as determined according to ISO 1183-1:2012 at 23°C;
- a melt index $MI_2$ ranging from 3.0 to 30.0 g/10 min as determined according to ISO 1133-2011 at 190 °C under a load of 2.16 kg; and
- a flow activation energy fulfilling the following relationship:

$$Eact\ (kJ/mole) > 70 - 12\ ln\ (MI_2).$$

**14.** The polyethylene resin according to claim 13 is **characterized in that** it has:

- a ratio of complex viscosity at a frequency of 1 rad/sec to the complex viscosity at a frequency of 100 rad/sec of at most 3.5 wherein the complex viscosities are measured at 190°C; and/or
- a number average molecular weight (Mn) of at least 3,000 Da as determined by gel permeation chromatography.

**15.** Use of a polyethylene resin according to claim 13 or 14 on grinding machines to prepare micropellets or powder.

**16.** Micropellets or powder prepared from a polyethylene resin according to claim 13 or 14.

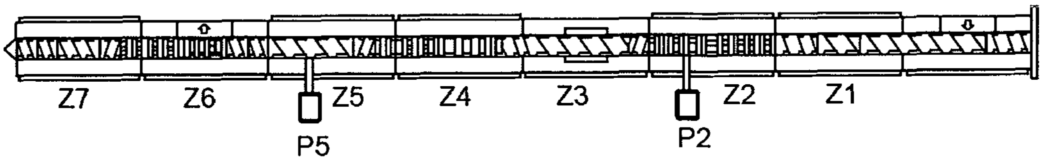


Figure 1

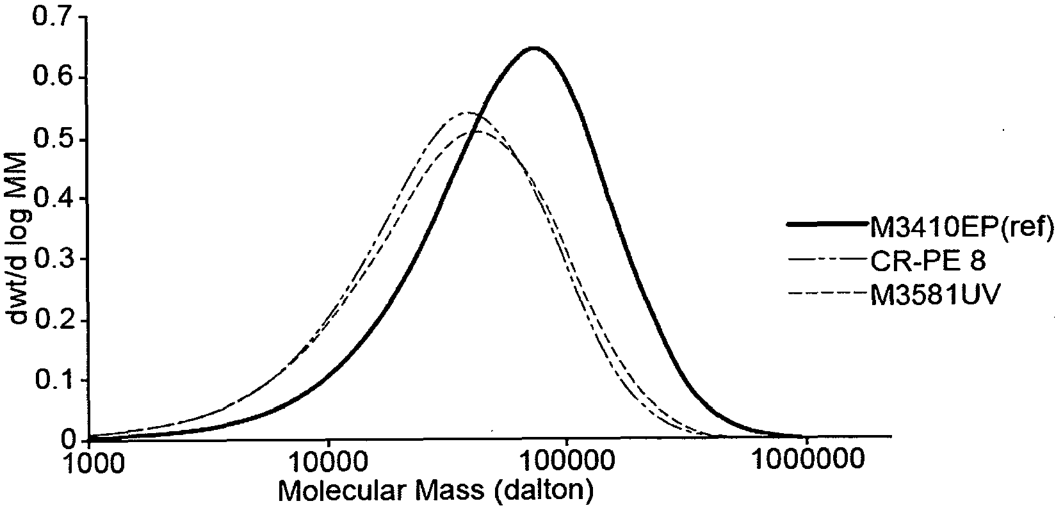


Figure 2

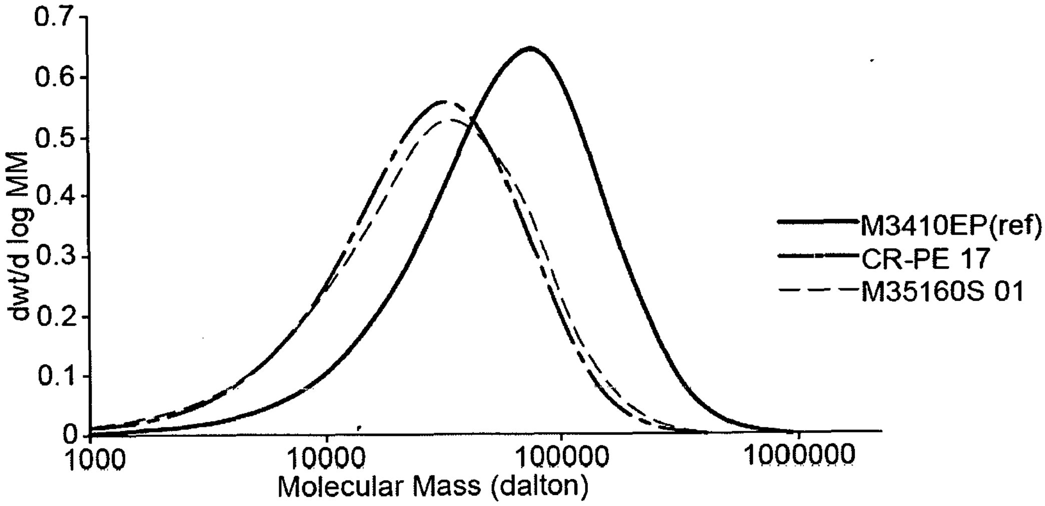


Figure 3

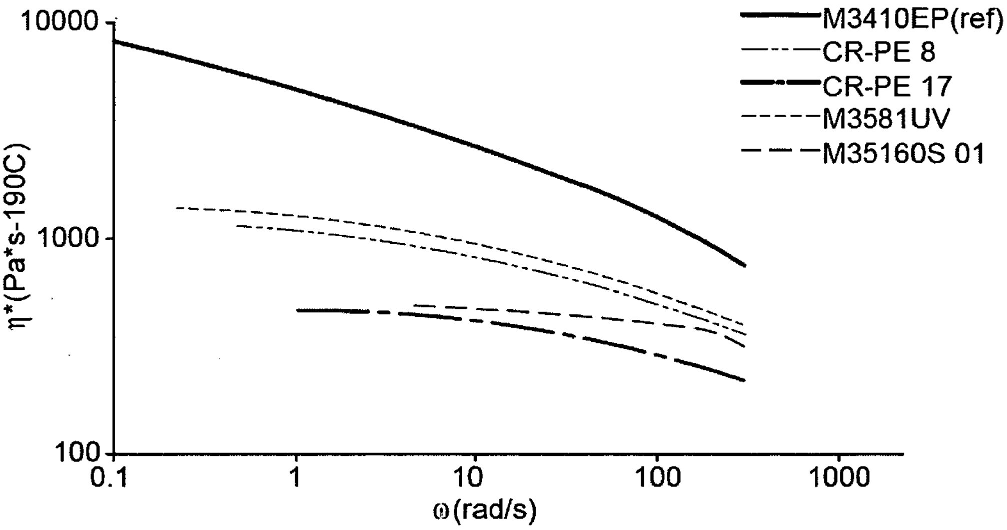


Figure 4

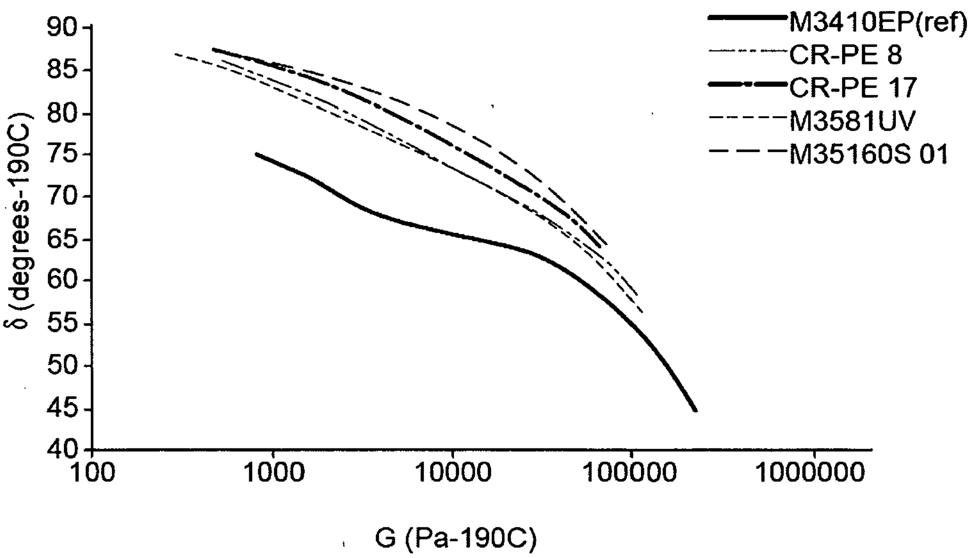


Figure 5

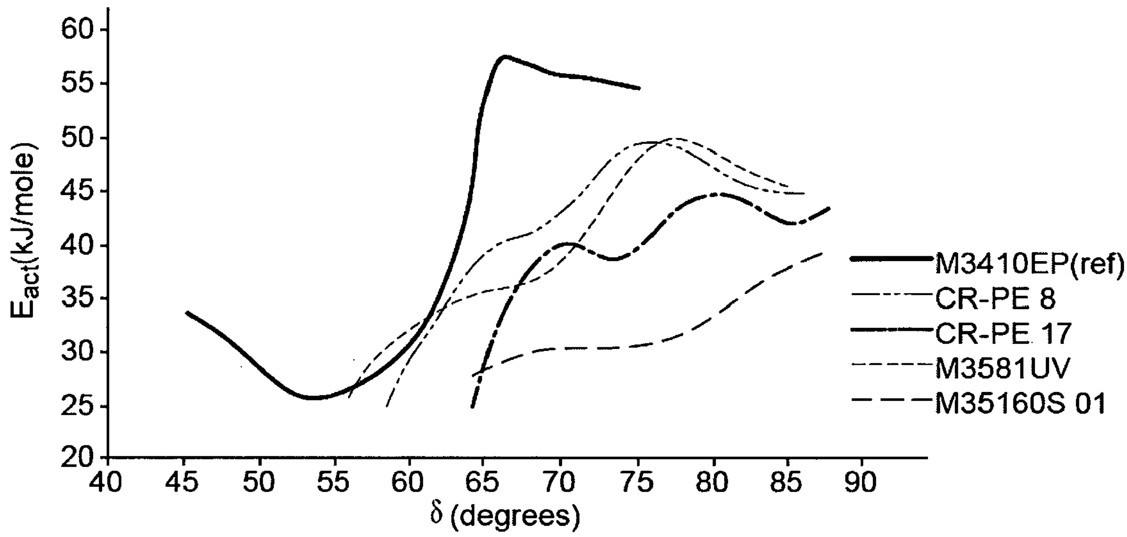


Figure 6

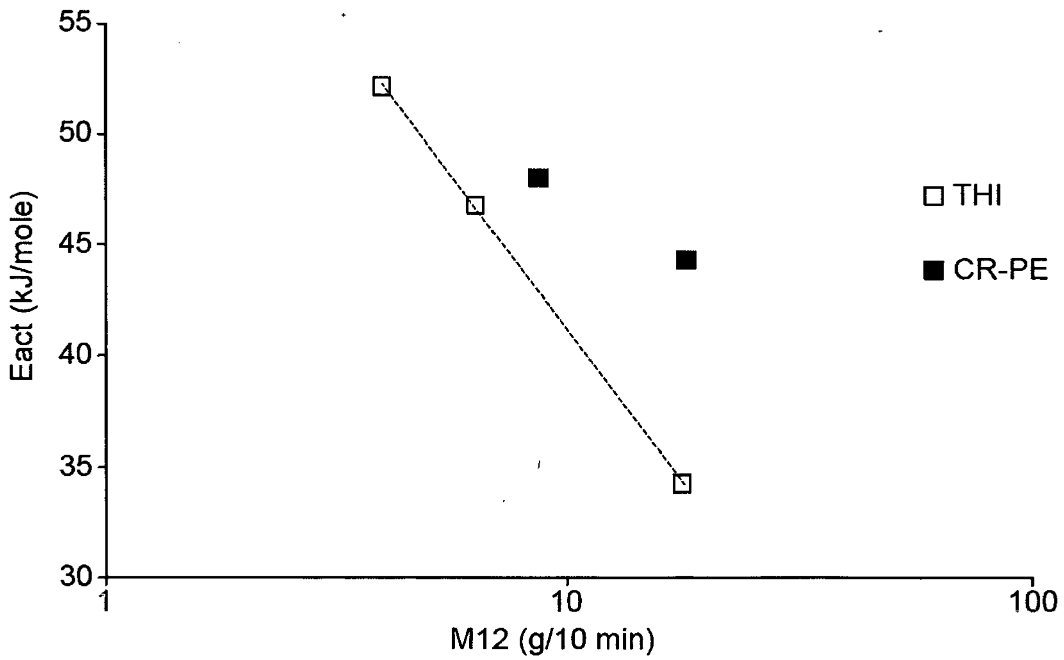


Figure 7

Europäisches Patentamt
European Patent Office
Office européen des brevets

# EUROPEAN SEARCH REPORT

Application Number
EP 24 31 5279

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/298129 A1 (TSO CHUNG [US] ET AL) 18 October 2018 (2018-10-18) * paragraphs [0130], [0096], [0100], [0113], [0114], [0135], [0098], [0022], [0130]; claim 1; table 1 * | 1-8, 13-16 | INV. B29C41/00 B29B17/00 B29C41/04 C08L23/06 |
| A | US 2022/315743 A1 (MEUL ROBBIE RENE [BE] ET AL) 6 October 2022 (2022-10-06) * paragraph [0047] - paragraph [0053]; claims 1,10,13 * | 1-8, 13-16 | |
| A | WO 2024/036357 A1 (MATRIX POLYMERS AUSTRALIA PTY LTD [AU]) 22 February 2024 (2024-02-22) * paragraphs [0053], [0054]; claims 1,16; table 1 * | 1-8, 13-16 | |
| A | US 11 993 699 B2 (FINA TECHNOLOGY [US]) 28 May 2024 (2024-05-28) * claims 1-5; examples 1-3 * | 1-8, 13-16 | TECHNICAL FIELDS SEARCHED (IPC) |
| A | EP 2 747 974 B1 (TOTAL RES & TECHNOLOGY FELUY [BE]) 27 June 2018 (2018-06-27) * claim 1; example 1 * | 1-8, 13-16 | B29C B29B B29K C08L |
| A | EP 1 428 841 A1 (ATOFINA RES [BE]) 16 June 2004 (2004-06-16) * paragraph [0008] - paragraph [0019] * | 1-8, 13-16 | |
| A | WO 96/30180 A1 (EXXON CHEMICAL PATENTS INC [US]) 3 October 1996 (1996-10-03) * claim 1; example 1 * | 1-8, 13-16 | |
| A | US 2012/130027 A1 (STANDAERT ALAIN [BE] ET AL) 24 May 2012 (2012-05-24) * claims 1,5,6,9,10 * | 1-8, 13-16 | |

~~The present search report has been drawn up for all claims~~

2

| Place of search | Date of completion of the search | Examiner |
|---|---|---|
| Munich | 4 December 2024 | Ferrer Santos, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

Application Number
EP 24 31 5279

## CLAIMS INCURRING FEES

The present European patent application comprised at the time of filing claims for which payment was due.

- [ ] Only part of the claims have been paid within the prescribed time limit. The present European search report has been drawn up for those claims for which no payment was due and for those claims for which claims fees have been paid, namely claim(s):

- [ ] No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

- [ ] All further search fees have been paid within the fixed time limit. The present European search report has been drawn up for all claims.

- [ ] As all searchable claims could be searched without effort justifying an additional fee, the Search Division did not invite payment of any additional fee.

- [ ] Only part of the further search fees have been paid within the fixed time limit. The present European search report has been drawn up for those parts of the European patent application which relate to the inventions in respect of which search fees have been paid, namely claims:

- [X] None of the further search fees have been paid within the fixed time limit. The present European search report has been drawn up for those parts of the European patent application which relate to the invention first mentioned in the claims, namely claims:

  1-8, 13-16

- [ ] The present supplementary European search report has been drawn up for those parts of the European patent application which relate to the invention first mentioned in the claims (Rule 164 (1) EPC).

Europäisches Patentamt
European Patent Office
Office européen des brevets

# LACK OF UNITY OF INVENTION SHEET B

Application Number
EP 24 31 5279

The Search Division considers that the present European patent application does not comply with the requirements of unity of invention and relates to several inventions or groups of inventions, namely:

1. claims: 1-8, 13-16

   Rotomoulded article and process

   ---

2. claims: 9-12

   Thermal treatment of a polyethylene

   ---

# ANNEX TO THE EUROPEAN SEARCH REPORT ON EUROPEAN PATENT APPLICATION NO.

EP 24 31 5279

This annex lists the patent family members relating to the patent documents cited in the above-mentioned European search report. The members are as contained in the European Patent Office EDP file on
The European Patent Office is in no way liable for these particulars which are merely given for the purpose of information.

04-12-2024

| Patent document cited in search report | Publication date | Patent family member(s) | Publication date |
|---|---|---|---|
| US 2018298129 A1 | 18-10-2018 | BR 112019021622 A2 | 12-05-2020 |
| | | CA 3059357 A1 | 25-10-2018 |
| | | CN 110520297 A | 29-11-2019 |
| | | EP 3612389 A1 | 26-02-2020 |
| | | KR 20190137102 A | 10-12-2019 |
| | | MY 189435 A | 11-02-2022 |
| | | RU 2731912 C1 | 09-09-2020 |
| | | US 9975976 B1 | 22-05-2018 |
| | | US 2018298129 A1 | 18-10-2018 |
| | | WO 2018194881 A1 | 25-10-2018 |
| US 2022315743 A1 | 06-10-2022 | NONE | |
| WO 2024036357 A1 | 22-02-2024 | NONE | |
| US 11993699 B2 | 28-05-2024 | US 2020087495 A1 | 19-03-2020 |
| | | US 2024247138 A1 | 25-07-2024 |
| | | WO 2020056119 A1 | 19-03-2020 |
| EP 2747974 B1 | 27-06-2018 | AU 2012306302 A1 | 13-03-2014 |
| | | CN 104010787 A | 27-08-2014 |
| | | EP 2747974 A1 | 02-07-2014 |
| | | ES 2688291 T3 | 31-10-2018 |
| | | MY 173905 A | 26-02-2020 |
| | | NZ 622629 A | 27-02-2015 |
| | | PH 12014500448 A1 | 14-04-2014 |
| | | US 2014220282 A1 | 07-08-2014 |
| | | WO 2013034702 A1 | 14-03-2013 |
| EP 1428841 A1 | 16-06-2004 | NONE | |
| WO 9630180 A1 | 03-10-1996 | CA 2215253 A1 | 03-10-1996 |
| | | EP 0817711 A1 | 14-01-1998 |
| | | WO 9630180 A1 | 03-10-1996 |
| US 2012130027 A1 | 24-05-2012 | BR PI1011799 A2 | 22-03-2016 |
| | | CN 102471409 A | 23-05-2012 |
| | | DK 2451851 T3 | 04-01-2016 |
| | | EA 201270091 A1 | 30-05-2012 |
| | | EP 2451851 A1 | 16-05-2012 |
| | | ES 2556238 T3 | 14-01-2016 |
| | | JP 2012532950 A | 20-12-2012 |
| | | KR 20120027501 A | 21-03-2012 |
| | | MX 344739 B | 04-01-2017 |
| | | PL 2451851 T3 | 29-02-2016 |
| | | US 2012130027 A1 | 24-05-2012 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO.

EP 24 31 5279

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2024

| Patent document cited in search report | Publication date | Patent family member(s) | Publication date |
|---|---|---|---|
| | | US 2014008844 A1 | 09-01-2014 |
| | | WO 2011004032 A1 | 13-01-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2023151995 A
- WO 2023151996 A
- WO 9635729 A


### Non-patent literature cited in the description


- **G.J. RAY et al.** *Macromolecules*, 1977, vol. 10 (4), 773-778